# EUROPÄISCHE PATENTSCHRIFT

(11) **EP 3 195 773 B1**
(45) Veröffentlichungstag und Bekanntmachung des Hinweises auf die Patenterteilung: **05.04.2023**
(21) Anmeldenummer: 17150855.9
(22) Anmeldetag: 26.11.2015
(51) Int. Cl.: A47K 3/34, E05D 15/06, E06B 3/964, F16B 7/04

(54) **GLASSCHIEBETÜR**
GLASS SLIDING DOOR
PORTE COULISSANTE EN VERRE

(30) Priorität: 03.12.2014 DE 102014224811
(43) Veröffentlichungstag der Anmeldung: 26.07.2017
(62) Teilanmeldung aus: 15196546.4
(73) Patentinhaber: Gebr. Willach GmbH, 53809 Ruppichteroth (DE)
(72) Erfinder: Willach, Dr. Jens, 53783 Eitorf (DE); Stommel, Wilfried, 53809 Ruppichteroth (DE)
(74) Vertreter: dompatent von Kreisler Selting Werner - Partnerschaft von Patent- und Rechtsanwälten mbB

(56) Entgegenhaltungen:
- EP-A1- 0 623 755
- EP-A1- 1 469 152
- EP-A1- 1 859 710
- AU-B3- 614 259
- DE-U1- 29 824 755
- DE-U1-202013 007 976
- FR-A1- 2 726 314
- US-A- 2 197 385
- US-A1- 2009 056 227
- US-A1- 2013 025 232

## Beschreibung

Die vorliegende Erfindung betrifft eine Glasschiebetür insbesondere für eine Duschkabine mit einer Laufschiene und mit einem an der Laufschiene mit mindestens einem Laufwerk geführten Türflügel, wobei das Laufwerk mindestens eine Laufrolle aufweist, die auf einer Laufbahnoberfläche einer Laufbahn der Laufschiene geführt ist.

Duschkabinen werden häufig mit Hilfe von zumeist durchsichtigen Wänden abgetrennt. Ein Teil der Wände wird dabei durch Türen gebildet. Neben herkömmlichen Schwingtüren sind auch Schiebetüren als Teil der Duschabtrennung bekannt.

Neben Duschkabinen, die in Wandnischen gebildet werden, wobei lediglich eine Wand durch die Duschabtrennung gebildet werden muss, sind auch sogenannte Übereckabtrennungen bekannt, bei denen zwei in einem Winkel zueinander verlaufende Wände die Duschabtrennung bilden. Um einen vereinfachten Zugang bei derartigen Duschkabinen zu gewährleisten, ist es zumeist vorgesehen, dass in dem durch die Duschkabinen gebildeten Eckbereich an jeder der Duschwände eine Tür angeordnet ist, um somit eine größtmögliche Eintrittsöffnung zu der Duschkabine zu schaffen.

Bei der Verwendung von Glaswänden und Glasschiebetüren für eine Duschkabine besteht grundsätzlich ein Nachteil darin, dass eine relativ große Schienenkonstruktion verwendet werden muss, in der die Glasschiebetür geführt ist. Darüber hinaus entsteht bei Duschkabinen mit über Eck angeordneten Duschabtrennungen ein Stabilitätsproblem, so dass häufig ein zusätzlicher Befestigungspunkt im Eckbereich der Duschabtrennung, z.B. an der Decke, geschaffen werden muss.

Es sind ferner Glasschiebetüren für Duschkabinen bekannt, bei denen das Laufwerk an zwei Seiten eine Laufrolle aufweist. Diese Laufwerke sind jedoch relativ aufwendig zu montieren, da zumeist das Laufwerk von der Stirnseite der Laufschiene eingeschoben werden muss, wodurch neben einem erhöhten Platzbedarf auch eine langwierigere Montage begründet wird.

Sowohl sehr große Schienenkonstruktionen als auch eine zusätzliche Befestigung beeinträchtigen jedoch das ästhetische Erscheinungsbild einer Duschkabine, so dass ein Verbesserungsbedarf besteht. Als ästhetisch störend wird insbesondere eine Laufschiene empfunden, die eine zu große Höhe aufweist, das heißt, dass in Höhenrichtung der Glasschiebetür eine zu große Erstreckung der Laufschiene vorliegt.

FR 2 726 314 A1 offenbart eine Vorrichtung zur Aufhängung einer Schiebetür mit mindestens einer Schiene zur Aufhängung und zum Schieben der Tür und einer vorderen Abdeckung oder Verkleidung die die Schiene abdeckt und verdeckt, wobei die Schiene und die Abdeckung aus einem einzigen Teil bestehen.

US 2009/056227 A1 offenbart eine Glasschiebetür mit einer Laufschiene, wobei die Laufschiene mittels eines Verstellteils mit einem Wandverbinder verbunden ist. US 2013/0025232 A1 offenbart eine Glasschiebetür, bei der eine Laufschiene an einem Rahmenelement der Glasschiebetür befestigt ist. Hierzu greift ein Vorsprung mit mehreren vorstehenden Haken in Öffnungen in einem rohrförmigen Abschnitt der Laufschiene ein.

AU 614 259 B3 offenbart eine Glasschiebetür, bei der die Laufschiene mittels Verbinder an Pfosten befestigt ist.

EP 1 469 152 A1 offenbart eine Laufschiene für eine Schiebetür, wobei die Laufschiene mittels eines Wandverbinders an einer Wand befestigbar ist, wobei der Wandverbinder eine Befestigungsplatte und einen in eine Nut der Laufschiene eingreifenden Vorsprung aufweist.

Es ist daher die Aufgabe der vorliegenden Erfindung, eine Glasschiebetür für eine Duschkabine mit einer Laufschiene zu schaffen, die eine ästhetisch ansprechende Laufschiene aufweist. Dabei sollte möglichst auf zusätzliche Befestigungselemente im Eckbereich verzichtet und insbesondere eine einfache Montierbarkeit gewährleistet werden.

Die Erfindung ist definiert durch die Merkmale des Anspruchs 1.

Die Erfindung sieht eine Glasschiebetür insbesondere für eine Duschkabine mit einer Laufschiene mit einem mit mindestens einem Laufwerk geführten Türflügel auf, wobei das Laufwerk mindestens eine Laufrolle aufweist, die auf einer Laufbahnoberfläche einer Laufbahn der Laufschiene geführt ist.

Die Erfindung sieht vor, dass die Laufschiene mittels eines Wandverbinders an einer Wand befestigbar ist, wobei der Wandverbinder eine Befestigungsplatte und mehrere Vorsprünge aufweist, die in unterschiedliche Nuten der Laufschiene eingreifen, wobei ein Vorsprung in eine Führungsnut der Laufschiene und/oder in eine an die Laufbahn der Laufschiene angrenzende Nut eingreift, der mit der Laufschiene befestigbar ist. Mittels der Befestigungsplatte lässt sich der Wandverbinder vorteilhafterweise an einer Wand, an der die Laufschiene angebracht werden soll, befestigen. Die Laufschiene kann dann auf einfache Art und Weise an dem Wandverbinder angebracht werden, indem die Laufschiene auf den Vorsprung des Wandverbinders aufgeschoben wird, so dass der Vorsprung in eine Führungsnut der Laufschiene eingreift. Auch kann der Vorsprung in eine an die Laufbahn angrenzende Nut der Laufschiene eingeschoben werden.

Die Führungsnut der Laufschiene kann beispielsweise eine Nut sein, in der weitere Einrichtungen der Glasschiebetür befestigbar sind, wie beispielsweise eine Federdämpfereinheit eines Einzugssystems für das Laufwerk.

Durch das Eingreifen des Vorsprungs in eine Führungsnut, kann eine sehr stabile Befestigung der Laufschiene an dem Wandverbinder geschaffen werden. Der Vorsprung kann beispielsweise mit der Laufschiene verschraubt sein. Dies kann beispielsweise über einen oder mehrere Klemmsteine erfolgen.

Die Vorsprünge sind als Plattenteile ausgebildet. Diese können beispielsweise von der Befestigungsplatte abgekantet sein.

Die Erfindung kann ferner vorsehen, dass die Laufschiene einen oberhalb der Laufbahn angeordneten Führungskörper aufweist, wobei der Führungskörper die Laufrolle in einer Laufposition auf der Laufbahn hält und wobei die Laufrolle beim Einsetzen des Laufwerks in die Laufschiene zum Erreichen der Laufposition zwischen Führungskörper und Laufbahn einschwenkbar ist.

Durch das Vorsehen eines Laufwerks mit einseitig angeordneter Laufrolle oder Laufrollen kann die Laufschiene im Vergleich zu Ausführungen mit Laufwerken mit beidseitig angeordneten Laufrollen relativ schmal ausgestaltet werden.

Ferner ermöglicht die Anordnung eines Führungskörpers, der die Laufrolle in einer Laufposition auf der Laufbahn hält, wobei die Laufrolle beim Einsetzen des Laufwerks in die Laufschiene zum Erreichen der Laufposition zwischen Führungskörper und Laufbahn einschwenkbar ist, eine Ausgestaltung der Laufschiene mit relativ geringer Höhe, da bei einer derartigen Ausführungsform auf ein zusätzliches Element zur Aushängesicherung, dass zumeist einen zusätzlichen Platzbedarf besitzt, verzichtet werden kann. Ein Aushängen des Laufwerks aus der Laufbahn wird bei der Erfindung durch den Führungskörper verhindert. Dadurch, dass die Laufrolle beim Einsetzen des Laufwerks in die Laufschiene zwischen Führungskörper und Laufbahn eingeschwenkt wird, kann das Laufwerk von der Längsseite in die Laufschiene eingesetzt werden, so dass die Montage der erfindungsgemäßen Glasschiebetür wesentlich vereinfacht wird. Der die Laufbahn und den Führungskörper bildende Teil der Laufschiene ist insbesondere einstückig, beispielsweise als Extrusionsprofil, ausgebildet.

Dabei kann auch vorgesehen sein, dass zunächst nur ein Teil des Laufwerks eingesetzt wird. Beispielsweise kann zunächst nur ein die Laufrolle tragendes Teilstück des Laufwerks in die Laufschiene eingesetzt und anschließend mittels eines zweiten Teilstücks der Türflügel der Glasschiebetür an dem Laufwerk befestigt werden.

Da der in dem Laufwerk angeordnete Türflügel nach Montage durch beispielsweise eine Führung eines Wandelementes oder einer Bodenführung nicht verschwenkt werden kann, wird sichergestellt, dass das Laufwerk in der Laufposition auf der Laufbahn verbleibt und nicht ungewollt durch Verschwenken von der Laufbahnoberfläche abkommt und somit aus der Laufposition gerät.

Die Laufbahnoberfläche ist im Rahmen der Erfindung der Teil der Laufbahn, der im normalen Gebrauch, das heißt während der Laufposition der Laufrolle und auch beim Einsetzen in Kontakt kommt mit der Laufrolle.

Die erfindungsgemäße Glasschiebetür ermöglicht somit einen sehr kompakten Aufbau der Laufschiene, so dass eine ästhetisch ansprechende Laufschiene geschaffen werden kann. Gleichzeitig wird ein vereinfachter Einbau der Glasschiebetür ermöglicht, da das Laufwerk auf einfache Art- und Weise von der Längsseite in die Laufschiene eingesetzt werden kann. Auch ist ein sichererer Einbau der erfindungsgemäßen Glasschiebetür gewährleistet, da nach Einsetzen des Laufwerks in die Laufschiene nachträglich einzubauende Sicherheitseinrichtungen, wie beispielsweise eine Aushebesicherung nicht notwendig sind, da die Laufschiene mittels des Führungskörpers diese Funktion übernimmt.

Vorzugsweise ist vorgesehen, dass die Laufschienenoberfläche konvex gewölbt ist und dass die Laufrolle eine konkave Lauffläche mit einem auf der von dem Türflügel abgewandten Seite angeordneten ersten Spurkranz mit einem maximalen Durchmesser D aufweist. Das Vorsehen einer konvex gewölbten Laufbahnoberfläche hat den Vorteil, dass die Laufbahn von sehr einfacher Konstruktion ist. Die Laufrolle mit konkaver Lauffläche kann vorteilhafter Weise mit der Laufbahnoberfläche zusammenwirken, so dass die Laufrolle auf der Laufbahnoberfläche abrollen kann. Das Vorsehen eines ersten Spurkranzes auf der von dem Türflügel abgewandten Seite stellt sicher, dass die Laufrolle in der Laufposition auf der Laufbahn gehalten wird, da der erste Spurkranz die Laufrolle einerseits auf der Laufbahnoberfläche führt und andererseits mit dem Führungskörper zusammenwirkt. Insbesondere ist vorgesehen, dass die Lauffläche der Laufrolle an die Laufbahnoberfläche angepasst ist. Unter dem maximalen Durchmesser D des ersten Spurkranzes wird der Durchmesser mit der größten Erstreckung in einer Richtung orthogonal zu der Drehachse der Laufrolle verstanden.

Die Lauffläche der Laufrolle und die Laufbahnoberfläche können derart aneinander angepasst sein, dass der Radius der Laufbahnoberfläche kleiner ist als der Radius der Lauffläche. Dadurch wird sichergestellt, dass die Laufrolle in vorteilhafter Weise auf der Laufbahnoberfläche abrollen kann, ohne dass es beispielsweise zu Klemmerscheinungen zwischen der Laufrolle und der Laufbahnoberfläche kommen kann. Die Lauffläche einer Laufrolle ist im Rahmen der Erfindung der Bereich der Laufrolle, der im normalen Gebrauch, das heißt in der Laufposition der Laufrolle und während des Einsetzens in Kontakt mit der Laufbahnoberfläche kommt.

Vorzugsweise ist vorgesehen, dass die Laufrolle auf der dem Türflügel zugewandten Seite einen zweiten Spurkranz aufweist, wobei die Lauffläche zwischen dem ersten und dem zweiten Spurkranz angeordnet ist. In der Laufposition wird die Laufbahnoberfläche somit von den beiden Spurkränzen umgeben, so dass eine besonders vorteilhafte Führung der Laufrolle möglich ist. Es kann beispielsweise vorgesehen sein, dass die Laufrolle symmetrisch aufgebaut ist, so dass der erste und der zweite Spurkranz die gleichen Abmessungen besitzen.

In einem besonders bevorzugten nicht beanspruchten Ausführungsbeispiel ist vorgesehen, dass die Laufbahnoberfläche einen höchsten Laufbahnpunkt aufweist, wobei der Abstand A zwischen dem höchsten Laufbahnpunkt und dem Führungskörper geringer ist als der maximale Durchmesser des ersten Spurkranzes der Laufrolle. Unter dem Abstand A zwischen dem höchsten Laufbahnpunkt und dem Führungskörper wird der kleinste Abstand zwischen dem höchsten Laufbahnpunkt und dem Führungskörper verstanden, das heißt, der Abstand A ist die kleinstmögliche lineare Wegstrecke zwischen dem höchsten Laufbahnpunkt und dem Führungskörper.

Dadurch kann sichergestellt werden, dass die Laufrolle in ihrer Laufposition nicht durch eine gradlinige Bewegung von der Laufbahnoberfläche abgenommen werden kann, sondern nur durch ein Verschwenken aus der Laufschiene entfernbar ist. Somit ist sichergestellt, dass der Führungskörper seine Führungsfunktion in zuverlässiger Weise ausüben kann.

Vorzugsweise ist vorgesehen, dass in der Laufposition zwischen der Lauffläche der Laufrolle und der Laufbahnoberfläche ein Kontaktpunkt gebildet ist, wobei der Kontaktpunkt an der Lauffläche der Laufrolle einen Abstand B von einem am weitesten entfernten Punkt des ersten Spurkranzes und der Kontaktpunkt an der Laufbahnoberfläche einen Abstand C zu dem Führungskörper aufweist und wobei gilt C>B. Unter dem Abstand C zwischen dem Kontaktpunkt und dem Führungskörper wird der kleinste Abstand zwischen dem Kontaktpunkt und dem Führungskörper verstanden, das heißt, der Abstand C ist die kleinstmögliche lineare Wegstrecke zwischen dem Kontaktpunkt und dem Führungskörper. Dadurch wird sichergestellt, dass ein Einschwenken der Laufrolle zwischen Führungskörper und Laufbahn in vorteilhafter Weise möglich ist und der erste Spurkranz in der Laufposition der Laufrolle einen ausreichenden Freiraum besitzt und gleichzeitig durch den Führungskörper geführt werden kann.

Vorzugsweise ist vorgesehen, dass bei mehreren Punkten auf der Laufbahnoberfläche, die in radialer Richtung einen Abstand zu dem Führungskörper aufweisen, der Abstand C' größer ist als der Abstand B. Vorzugsweise gilt diese Bedingung bei jedem Punkt auf der Laufbahnoberfläche, der in radialer Richtung einen Abstand zu dem Führungskörper aufweist. Unter in radialer Richtung wird eine durch den Mittelpunkt der Laufbahnoberfläche gerichtete Richtung verstanden, das heißt bei einer Laufbahnoberfläche mit einem kreisförmigen Querschnitt wird der Mittelpunkt des Kreises verstanden. Bei einer Laufbahnoberfläche mit einem ellipsenförmigen Querschnitt wird der Mittelpunkt der Ellipse zur Definition der radialen Richtung herangezogen.

Bei dem Ausführungsbeispiel, bei dem jeder Punkt auf der Laufbahnoberfläche in radialer Richtung einen Abstand C' zum Führungskörper aufweist, der größer als Abstand B ist, besitzt die Laufschiene somit einen ausreichenden Freiraum um eine Laufrolle mit dem ersten Spurkranz bequem in die Laufposition einschwenken zu können. Beim Einschwenken des Laufwerks kann somit ohne aufwendige Verkantungsbewegungen die Laufrolle schräg an der Laufbahnoberfläche angesetzt werden, so dass die Lauffläche der Laufrolle die Laufbahnoberfläche berührt. Beim Einschwenken wird nun der Winkel zwischen der Rolle und der Laufschiene verändert, wobei der Kontaktpunkt zwischen der Lauffläche und der Laufbahnoberfläche auf der Laufbahnoberfläche wandert, bis die Laufrolle in der Laufposition ist.

In einem alternativen nicht beanspruchten Ausführungsbeispiel der Glasschiebetür ist vorgesehen, dass die Laufbahnoberfläche auf der dem Türflügel zugewandten Seite einen höchsten Laufbahnpunkt und die Laufbahnrolle einen maximalen Durchmesser D aufweist, wobei der Abstand A zwischen dem höchsten Laufbahnpunkt zu dem Führungskörper geringer ist als der maximale Durchmesser D der Laufrolle. Mit anderen Worten die Laufbahnoberfläche ist bei diesem Ausführungsbeispiel nicht konvex ausgeführt, sondern weist auf der dem Türflügel zugewandten Seite ein lokales Maximum auf, das in Längsrichtung beispielsweise eine Rippe bildet. Der höchste Laufbahnpunkt begrenzt somit die Laufbahnoberfläche auf der dem Türflügel zugewandten Seite, so dass eine vorteilhafte Führung der Laufrolle zwischen Laufbahnoberfläche und Führungskörper erfolgt.

Dabei kann vorgesehen sein, dass die Laufbahnoberfläche konkav gewölbt ist und die Laufrolle eine konvexe Lauffläche aufweist. Auf diese Weise ist eine vorteilhafte Führung der Laufrolle auf der Laufbahnoberfläche möglich. Die Laufbahnoberfläche und die konvexe Lauffläche der Laufrolle können dabei aneinander angepasst sein.

Vorzugsweise ist vorgesehen, dass der Radius der Laufbahnoberfläche größer ist als der Radius der Lauffläche. Auf diese Weise ist eine vorteilhafte Führung der Laufrolle auf der Laufbahnoberfläche möglich.

Vorzugsweise ist vorgesehen, dass in Laufposition zwischen der Lauffläche der Laufrolle und Laufbahnoberfläche ein Kontaktpunkt gebildet ist, wobei der Kontaktpunkt an der Lauffläche der Laufrolle einen Abstand B von einem am weitesten entfernten Punkt der Laufrolle und der Kontaktpunkt an der Laufbahnoberfläche einen Abstand C zu dem Führungskörper aufweist, wobei gilt C>B. Unter dem Abstand C zwischen dem Kontaktpunkt und dem Führungskörper wird der kleinste Abstand zwischen dem Kontaktpunkt und dem Führungskörper verstanden, das heißt, der Abstand C ist die kleinstmögliche lineare Wegstrecke zwischen dem Kontaktpunkt und dem Führungskörper. Auf diese Weise wird in vorteilhafter Weise gewährleistet, dass ein für das Einschwenken der Laufrolle in die Laufposition ausreichender Raum zwischen dem Führungskörper und der Laufbahnoberfläche gebildet ist.

In einer bevorzugten Ausführungsform der Erfindung ist vorgesehen, dass die Laufschiene mittels eines Eckverbinders mit einer zweiten Laufschiene verbunden ist. Dabei kann vorgesehen sein, dass in die Laufschiene ein Klemmstein klemmend eingesetzt ist, wobei zwischen dem Eckverbinder und dem Klemmstein eine Schraubverbindung gebildet ist.

Da Laufschienen häufig als Extrusionsprofile hergestellt sind, besteht die Schwierigkeit, eine Schraubverbindung mit in Längsrichtung der Schiene verlaufenden Schrauben mit der Laufschiene herzustellen. Insbesondere ist es unmöglich, eine Schraube von der Schiene aus in Längsrichtung in einen angrenzenden Gegenstand zu schrauben.

Durch das Vorsehen eines Klemmsteins, der klemmend in die Laufschiene eingesetzt wird, kann in vorteilhafter Weise eine Basis für eine Schraubverbindung geschaffen werden. Dadurch kann die Laufschiene in vorteilhafter Weise mit dem Eckverbinder verschraubt werden, indem eine Schraube von dem Klemmstein aus in den Eckverbinder geschraubt wird. Dadurch ist eine gute Zugänglichkeit zu der Schraube gewährleistet. Durch die Verwendung eines Klemmsteins wird eine aufwendige nachträgliche Bearbeitung der Schiene, beispielsweise das Erstellen von Bohrungen, vermieden. Ferner kann die Schiene in vorteilhafter Weise direkt an dem Montageort eingekürzt werden, ohne dass auf Bohrungen o.ä. in der Schiene geachtet werden muss. Die Laufschiene ist somit sehr flexibel einsetzbar.

Auf gleiche Weise kann der Eckverbinder auch mit der zweiten Laufschiene verbunden werden, indem in die zweite Laufschiene ebenfalls ein Klemmstein klemmend eingesetzt ist.

Der Klemmstein kann beispielsweise zwischen der Laufbahn und an die Laufbahn angrenzende Laufschienenprofilteile geklemmt sein.

Es kann vorgesehen sein, dass in dem Eckverbinder eine Schraubplatte formschlüssig aufgenommen ist, die in die Schraubverbindung eingreift. Auf diese Weise wird eine besonders stabile Verbindung zwischen dem Klemmstein und dem Eckverbinder ermöglicht. Beispielsweise kann der Eckverbinder als Kunststoffgussteil hergestellt werden und die Schraubplatte eine Metallplatte sein. Dadurch können sowohl eine gewichtssparende Ausgestaltung des Eckverbinders als auch eine stabile Schraubverbindung zwischen Eckverbinder und Laufschiene geschaffen werden.

Insbesondere kann durch die Schraubverbindung zwischen dem Klemmstein und dem Eckverbinder eine sehr feste Verbindung zwischen der Laufschiene und dem Eckverbinder geschaffen werden, wodurch die Stabilität der gesamten Laufschiene erhöht wird. Somit wird in vorteilhafter Weise ermöglicht, dass Übereckanordnungen von Duschabtrennungen ohne zusätzliche Befestigungsvorrichtungen der Laufschiene am Eck realisierbar sind.

In einem bevorzugten Ausführungsbeispiel der Erfindung ist vorgesehen, dass das Laufwerk zweiteilig ausgeführt ist, wobei ein die Laufrolle tragendes erstes Teilstück über eine Klemmschraube mit einem zweiten Teilstück verbindbar ist. Auf diese Weise lässt sich das Laufwerk in einfacher Art und Weise mit dem Türflügel verbinden. Insbesondere kann zunächst nur das erste Teilstück des Laufwagens in die Laufschiene eingesetzt werden, bevor anschließend der Türflügel mittels eines zweiten Teilstücks an einem ersten Teilstück befestigt wird. Dabei kann insbesondere vorgesehen sein, dass das erste und das zweite Teilstück klemmend an einem Türflügel fixierbar sind. Eine klemmende Fixierung des Laufwerks an dem Türflügel ist auch bei einer einteiligen Ausgestaltung des Laufwerks möglich.

Dabei kann eine Haltevorrichtung vorgesehen sein, die das erste Teilstück des Laufwagens hält, so dass sich das erste Teilstück des Laufwagens in einer zur Montage vorteilhaften Position befindet, beispielsweise mit der Laufrolle in der Laufposition. Die Haltevorrichtung kann das erste Teilstück des Laufwagens beispielsweise klemmend in der gewünschten Position halten und nach der Montage entfernt werden.

In einer besonders bevorzugten Ausführungsform ist vorgesehen, dass die Klemmschraube durch eine Aussparung in den Türflügel greift. Dadurch wird erreicht, dass ein Laufwerk von geringer Höhe verwirklicht werden kann, da das Laufwerk oberhalb des Türflügels nur einen geringen Aufbau, wie beispielsweise ein Koppelteil zu einer Einzugsvorrichtung aufweisen muss. Bei herkömmlichen klemmend mit einem Türflügel befestigten Laufwerken ist zumeist oberhalb des Türflügels ein höherer Aufbau des Laufwerks notwendig, um die Klemmschraube aufzunehmen. Gegenüber weiteren bekannten Ausgestaltungen, bei denen zur Befestigung des Laufwerks einzelne Klemmschrauben gegen Türflügel drücken, weist die erfindungsgemäße Ausgestaltung des Laufwerks eine höhere Haltekraft für den Türflügel auf. Ferner ermöglicht die erfindungsgemäße Ausführungsform, dass ein Laufwerk mit geringer Breite (Erstreckung in Richtung orthogonal zur Türflügelebene) geschaffen werden kann.

Die Aussparung in dem Türflügel kann beispielsweise eine Bohrung in dem Türflügel sein. Durch die geringe Höhe des Laufwerks kann auch die Laufschiene, die das Laufwerk in ästhetischer Weise verdecken soll, von geringer Höhe und somit ästhetisch ausgestaltet werden.

Ein Verfahren zum Einbau einer Glasschiebetür kann folgende Schritte aufweisen:
- Anbringen der Laufschiene an einer Wand,
- Einsetzen des Laufwerks oder des ersten Teilstücks des Laufwerks in die Laufschiene von der Längsseite der Laufschiene aus, wobei die Laufrolle zwischen Führungskörper und Laufbahn eingeschwenkt wird,
- Befestigen des Türflügels an dem Laufwerk durch Einsetzen des Türflügels in das Laufwerk oder durch Anlegen des Türflügels an das erste Teilstück des Laufwerks und Verbinden des zweiten Teilstücks des Laufwerks mit dem ersten Teilstück.

Mittels des Verfahrens lässt sich eine Glasschiebetür auf besonders einfache Art und Weise montieren.

Dabei kann vorgesehen sein, dass das Laufwerk klemmend an dem Türflügel befestigt wird, wobei vorzugsweise der Laufwagen eine Klemmschraube aufweist, die durch eine Aussparung in dem Türflügel geschraubt wird.

Bei dem Verfahren, bei dem zunächst das erste Teilstück des Laufwerks in die Laufschiene eingesetzt wird, kann vorgesehen sein, dass eine Haltevorrichtung an oder in der Laufschiene angeordnet wird, die das erste Teilstück des Laufwerks in einer zur Montage vorteilhaften Position hält, beispielsweise mit der Laufrolle in der Laufposition. Nach dem Befestigen des Türflügels kann die Haltevorrichtung wieder entfernt werden.

Im Folgenden wird unter Bezugnahme auf die nachfolgenden Figuren die Erfindung näher erläutert. Es zeigen:
- Fig. 1: eine schematische perspektivische Darstellung einer Duschkabine mit einer erfindungsgemäßen Glasschiebetür,
- Fig. 2: eine schematische Schnittdarstellung der Laufschiene einer erfindungsgemäßen Glasschiebetür mit eingehängtem Türflügel,
- Fig. 3a bis 3c: schematische Schnittdarstellungen der Laufschiene ohne Laufwerk,
- Fig. 4: eine schematische Seitenansicht der Laufschiene mit Wandverbinder gemäß der vorliegenden Erfindung und
- Fig. 5: eine Ansicht von oben auf einen mit einer Laufschiene verbundenen Eckverbinder.

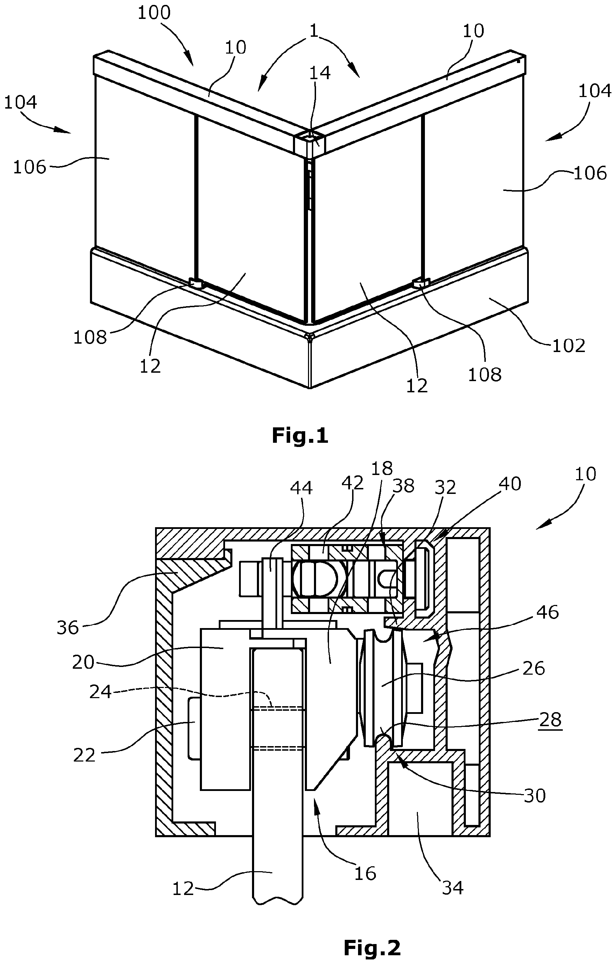

Fig. 1 ist eine Duschkabine 100 mit zwei erfindungsgemäßen Glasschiebetüren 1 schematisch in einer perspektivischen Darstellung gezeigt. Die Duschkabine 100 weist eine Duschwanne 102 auf, an der zwei Duschabtrennungen 104 in einem Winkel zueinander angeordnet sind. Die Duschabtrennungen 104 weisen jeweils eine erfindungsgemäße Glasschiebetür 1 auf.

Die Laufschienen 10 der Glasschiebetüren 1 sind mit einem Eckverbinder 14 miteinander verbunden. Auf der von dem Eckverbinder 14 abgewandten Seite sind die Laufschienen 10 jeweils an einer nicht dargestellten Wand befestigt.

Die Duschabtrennung 104 weist jeweils feststehende Wandelemente 106 auf, auf die die Laufschienen 10 aufgesetzt sind und somit die Laufschienen 10 zum Teil tragen.

Die Türflügel 12 sind ferner über Bodenführungen 108, die an den feststehenden Wandelementen 106 befestigt sind, geführt.

Die Führung des Türflügels 12 in der Laufschiene 10 erfolgt mittels mindestens eines Laufwerks 16, das am besten aus Fig. 2 ersichtlich ist. Vorzugsweise wird ein Türflügel 12 mit zwei Laufwerken 16 geführt.

Ein Laufwerk 16 besteht jeweils aus einem ersten Teilstück 18 und einem zweiten Teilstück 20, die miteinander verschraubt sind. Dazu ist eine Klemmschraube 22 vorgesehen, die das zweite Teilstück 20 sowie den Türflügel 12 in einer Aussparung 24 durchdringt und in das erste Teilstück 18 eingreift. Mittels der Klemmschraube kann das Laufwerk 16 klemmend an dem Türflügel 12 befestigt werden.

Das Laufwerk weist einseitig mindestens eine Laufrolle 26 auf. Die Laufrolle 26 ist auf einer Laufbahnoberfläche 28 einer Laufbahn 30 geführt. Oberhalb der Laufbahn 30 ist ein Führungskörper 32 in Form einer vorstehenden Rippe gebildet. Der Führungskörper 32 hält die Laufrolle 26 in der in Fig. 2 dargestellten Laufposition auf der Laufbahn 30. Mit anderen Worten, beim Verschieben des Türflügels sorgt der Führungskörper 32 dafür, dass sich die Laufrolle 26 nicht ungewollt aus der Laufbahn 30 herausbewegen kann.

An der Unterseite der Laufschiene 10 ist eine Nut 34 angeordnet, mit der die Laufschiene 10 auf das Wandelement 106 aufgesetzt werden kann.

Auf der der Duschkabine 100 zugewandten Seite der Laufschiene 10 weist die Laufschiene eine abnehmbare Blende 36 auf, mit der das Innere der Laufschiene 10 verdeckt und zumindest grob gegen Spritzwasser geschützt werden kann.

Oberhalb des Führungskörpers 32 ist eine Führungsnut 38 mit parallel angeordneter Befestigungsnut 40 angeordnet. In die Führungsnut 38 kann beispielsweise eine Einzugseinrichtung 42 mit Federdämpfereinheit angeordnet werden und mittels eines Befestigungskörpers in der Befestigungsnut 40 befestigt werden.

Das Laufwerk 16 weist ferner eine Koppeleinrichtung 44 auf, mit der das Laufwerk 16 an der Einzugseinrichtung 42 angreifen kann. Auf diese Weise kann das Laufwerk 16 nach Eingreifen in die Einzugseinrichtung 42 mittels der Einzugseinrichtung 42 in eine Endposition gezogen werden. Die erfindungsgemäße Glasschiebetür 1 kann jeweils eine Einzugseinrichtung 42 für jede Endposition aufweisen.

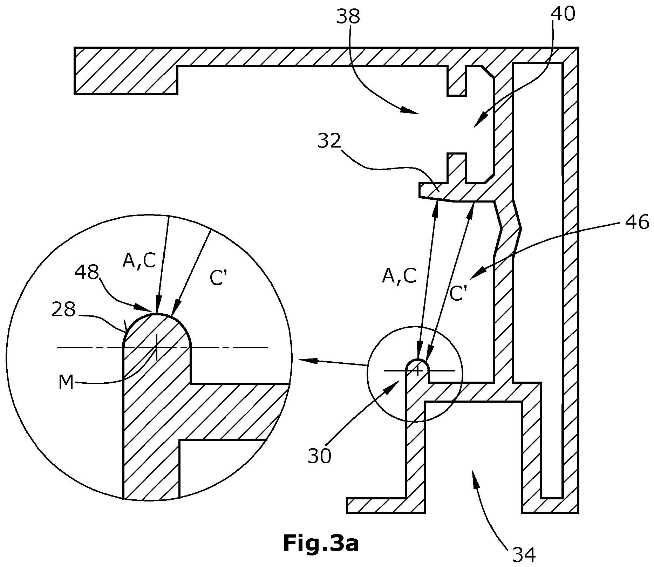

Zwischen der Laufbahnoberfläche 28 und dem Führungskörper 32 ist ein Freiraum 46 geschaffen, der ausreichend Raum für die Laufrolle 26 bietet. Dabei ist der Freiraum 46 derart ausgestaltet, dass beim Einsetzen des Laufwerks 16 in die Laufschiene 10 die Laufrolle 26 zum Erreichen der Laufposition zwischen Führungskörper 32 und Laufbahn 30 einschwenkbar ist. Der Freiraum 46 sowie das Einschwenken der Laufrolle 26 sind in den Figuren 3a bis 3c im Detail dargestellt.

In Fig. 3a ist der Aufbau der Laufschiene 10 ohne Laufwerk 16 schematisch dargestellt. Die Laufbahnoberfläche 28 ist die Oberfläche der Laufbahn 30, die während des normalen Gebrauchs in Kontakt mit der Laufrolle 26 kommt. Zu dem normalen Gebrauch zählt das Verfahren der Laufrolle 26 in der Laufposition und auch das Einsetzen bzw. das Abnehmen des Laufwerks 16.

Bei dem in den Fign. dargestellten Ausführungsbeispiel ist die Laufbahnoberfläche 28 konvex gewölbt und hat einen kreisbogenförmigen Querschnitt. In Fig. 3a ist schematisch durch gestrichelte Linien angedeutet, bis wohin sich die Laufbahnoberfläche 28 beispielsweise erstreckt.

Die Laufbahn weist ferner einen höchsten Laufbahnpunkt 48 auf, der zu dem Führungskörper 32 einen Abstand A aufweist. Der Abstand A ist dabei der kürzeste Abstand des höchsten Laufbahnpunkts 48 zu dem Führungskörper 32.

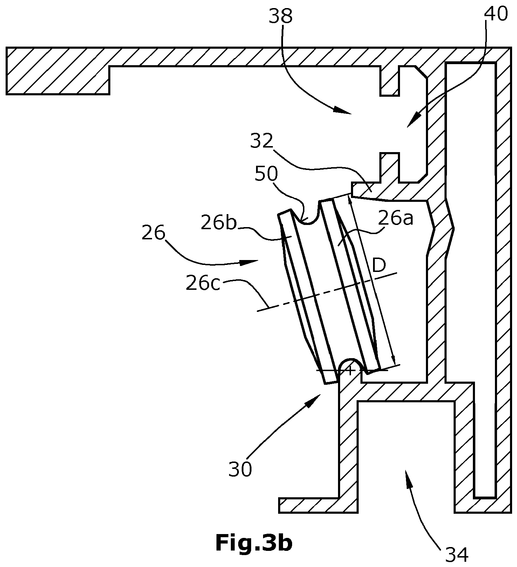

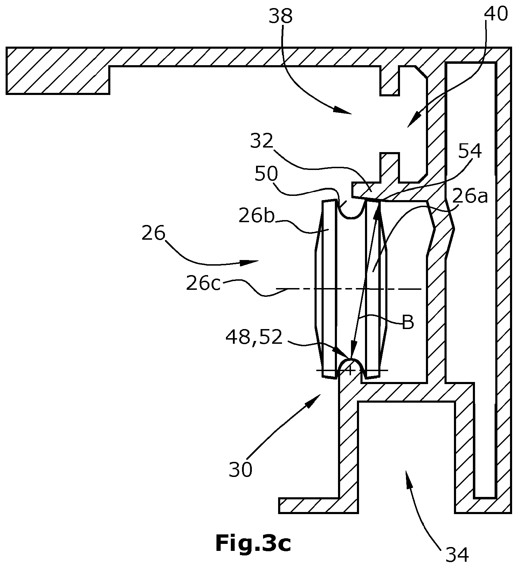

Die Laufrolle 26, die am besten in den Fign. 3b und 3c ersichtlich ist, weist einen ersten Spurkranz 26a und einen zweiten Spurkranz 26b auf, wobei zwischen dem ersten und dem zweiten Spurkranz 26a und 26b eine konkave Lauffläche 50 gebildet ist. Der erste Spurkranz 26a ist auf der von dem Türflügel abgewandten Seite an der Laufrolle 26 angeordnet und weist einen maximalen Durchmesser D auf. Der maximale Durchmesser D des Spurkranzes 26a ist dabei die größte Erstreckung des Spurkranzes 26a in eine Richtung orthogonal zu der schematisch in Fig. 3b angedeuteten Drehachse 26c der Laufrolle 26. Mit anderen Worten: Bei einem runden Spurkranz 26a ist ein maximaler Durchmesser D der normale Durchmesser des Spurkranzes, bei einem unrunden ersten Spurkranz 26a ist der maximale Durchmesser die maximale Erstreckung in die Richtung orthogonal zu der Drehachse 26c.

Der Freiraum 46 ist so ausgestaltet, dass der Abstand A zwischen dem Laufbahnpunkt 48 und dem Führungskörper 32 kleiner ist als der maximale Durchmesser D des ersten Spurkranzes 26a der Laufrolle 26. Dadurch wird sichergestellt, dass eine zuverlässige Führung der Laufrolle 26 durch den Führungskörper 32 gewährleistet ist, wobei gleichzeitig verhindert wird, dass die Laufrolle 26 ungewollt aus ihrer Laufposition herausbewegt wird.

In den Fign. 3b und 3c ist schematisch angedeutet, wie die Laufrolle 26 beim Einsetzen des nicht dargestellten Laufwerks 16 in die Laufschiene 10 zwischen Führungskörper 32 und Laufbahn 30 verschwenkt wird. Die Laufrolle 26 wird schräg an der Laufbahn 30 angesetzt, so dass die Lauffläche 50 auf der Laufbahnoberfläche 28 aufliegt. Beim Verschwenken gleitet nun die Lauffläche 50 auf der Laufbahnoberfläche 28 entlang bis die Laufrolle 26, die in der Fig. 3c dargestellte Laufposition erreicht.

Zwischen der Lauffläche 50 der Laufrolle 26 und der Laufbahnoberfläche 28 ist ein Kontaktpunkt 52 gebildet. Bei der in Fig. 3c dargestellten Situation ist der Kontaktpunkt 52 auf der Laufbahnoberfläche 28 der höchste Laufbahnpunkt 48. Zwischen dem Kontaktpunkt 52 an der Laufrolle 26 ist ein Abstand B zu dem am weitesten entfernten Punkt 54 des Spurkranzes 26a gebildet. Von dem Kontaktpunkt 52 auf der Laufbahnoberfläche 28, der in dem gezeigten Ausführungsbeispiel dem höchsten Laufbahnpunkt 48 entspricht, ist ein Abstand C zu dem Führungskörper 32 gebildet. Dieser Abstand C entspricht in dem dargestellten Ausführungsbeispiel dem Abstand A. Für diesen Abstand C gilt, dass dieser größer sein muss als der Abstand B.

Vorzugsweise ist vorgesehen, dass von jedem Punkt der Laufbahnoberfläche 28, der einen Abstand in radialer Richtung zu dem Führungskörper 32 aufweist, in radialer Richtung ein Abstand C' zu dem Führungskörper 32 verbleibt, der größer ist als der Abstand B. Ein radialer Abstand C' ist in der Fig. 3a schematisch angedeutet. Als radialer Abstand wird der Abstand von einem Punkt der Laufbahnoberfläche 28 in einer durch den Mittelpunkt M der Laufbahnoberfläche 28 gehenden Richtung zu dem Führungskörper 32 verstanden.

Dadurch wird gewährleistet, dass der Freiraum 46 ausreichend Platz bietet, um die Rolle 26 bequem in die Laufposition einzuschwenken.

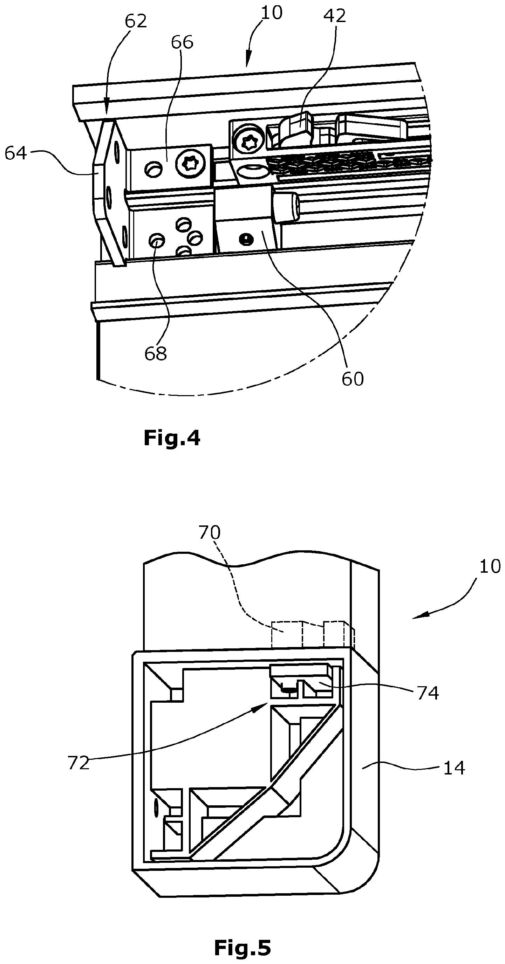

In Fig. 4 ist ein Ende der Laufschiene 10 schematisch dargestellt, in einer Blickrichtung aus der Duschkabine 100 auf die Laufschiene 10. Die Blende ist dabei nicht dargestellt. In der Fig. 4 ist die in der Führungsnut 38 angeordnete Einzugseinheit 42 dargestellt. Ferner ist ein Anschlag 60 für die Begrenzung des Laufwegs des Laufwerks 16 an einer Endposition zu sehen, der in die durch den Freiraum 46 und die Laufbahn 30 gebildete Nut eingeklemmt ist.

Mittels eines Wandverbinders 62 lässt sich die Laufschiene 10 an einer Wand befestigen. Dazu weist der Wandverbinder 62 eine Befestigungsplatte 64 auf, die an die Wand schraubbar ist. An der Wand können dazu an die Befestigungsplatte 64 angepasste Wandstücke vorgesehen sein. Der Wandverbinder 62 weist einen Vorsprung 66 auf, der in die Führungsnut 38 eingeschoben ist. Der Vorsprung 66 ist dabei als abgekantetes Plattenteil ausgebildet. Mittels eines angepassten Gegenstücks lässt sich der Vorsprung 66 in der Befestigungsnut 40 klemmend befestigen.

Der Wandverbinder 62 weist ferner einen zweiten Vorsprung 68 auf, der ebenfalls als abgekantetes Plattenteil ausgebildet ist. Dieser zweite Vorsprung 68 greift in die durch den Freiraum 46 gebildete Nut ein und lässt sich beispielsweise mittels einer Blechschraube mit der Laufschiene 10 verbinden. Über den Wandverbinder 62 ist eine sehr stabile Befestigung der Laufschiene 10 an einer Wand möglich.

In Fig. 5 ist der in der Fig. 1 dargestellte Eckverbinder 14 in einer Ansicht von oben schematisch dargestellt, wobei lediglich eine Laufschiene 10, die mit dem Eckverbinder verbunden ist, gezeigt ist. In vergleichbarer Weise wie der Anschlag 60 in der Fig. 4 ist ein Klemmstein 70 in der durch den Freiraum 46 gebildeten Nut eingeschraubt. Mittels des Klemmsteins 70 ist eine Schraubverbindung 72 mit dem Eckverbinder 14 möglich, wodurch eine sehr stabile Verbindung zwischen dem Eckverbinder 14 und der Laufschiene 10 geschaffen wird. Dazu ist eine Schraubplatte 74 formschlüssig in dem Eckverbinder 14 aufgenommen, in die die Schraubverbindung 72 eingreift. Dadurch lässt sich eine sehr stabile Befestigung der Schraubverbindung 72 schaffen. Es kann beispielsweise vorgesehen sein, dass der Eckverbinder 14 aus einem leichten Kunststoffmaterial besteht, wobei die Schraubplatte 74 aus Metall gefertigt ist. Dadurch lässt sich trotz einer gewichtssparenden Ausführung des Eckverbinders 14 eine stabile Verbindung zwischen der Laufschiene 10 und dem Eckverbinder 14 schaffen.

## Patentansprüche

1. Glasschiebetür (1) mit einer Laufschiene (10) und mit einem an der Laufschiene (10) mit mindestens einem Laufwerk (16) geführten Türflügel (12), wobei das Laufwerk (16) einseitig mindestens eine Laufrolle (26) aufweist, die auf einer Laufbahnoberfläche (28) einer Laufbahn (30) der Laufschiene (10) geführt ist, wobei die Laufschiene (10) mittels eines Wandverbinders (62) an einer Wand befestigbar ist, wobei der Wandverbinder (62) eine Befestigungsplatte (64) aufweist, wobei der Wandverbinder (62) mehrere Vorsprünge (66,68) aufweist, die als Plattenteile ausgebildet sind und die in unterschiedliche Nuten der Laufschiene (10) eingreifen, wobei einer der mehreren Vorsprünge (66,68) in eine Führungsnut (38) der Laufschiene (10) und/oder in eine an die Laufbahn (30) der Laufschiene (30) angrenzende Nut eingreift , der an der Laufschiene (10) befestigbar ist.

2. Glasschiebetür nach Anspruch 1, **dadurch gekennzeichnet, dass** der Vorsprung (66,68) mit der Laufschiene (10) verschraubt ist.

3. Glasschiebetür nach Anspruch 2, **dadurch gekennzeichnet, dass** der Vorsprung (66,68) über einen Klemmstein mit der Laufschiene (10) verschraubt ist.

4. Glasschiebetür nach einem der Ansprüche 1 bis 3 **dadurch gekennzeichnet, dass** die Plattenteile von der Befestigungsplatte (64) abgekantet sind.

5. Glasschiebetür nach einem der Ansprüche 1 bis 4, **dadurch gekennzeichnet, dass** die Laufschiene (10) einen oberhalb der Laufbahn (30) angeordneten Führungskörper (32) aufweist, wobei der Führungskörper (32) die Laufrolle (26) in einer Laufposition auf der Laufbahn (30) hält, und wobei die Laufrolle (26) beim Einsetzen des Laufwerks (16) in die Laufschiene (10) zum Erreichen der Laufposition zwischen Führungskörper (32) und Laufbahn (30) einschwenkbar ist.

6. Glasschiebetür nach einem der Ansprüche 1 bis 5, **dadurch gekennzeichnet, dass** die Laufbahnoberfläche (28) konvex gewölbt ist und dass die Laufrolle (26) eine konkave Lauffläche (50) mit einem auf der von dem Türflügel (12) abgewandten Seite angeordneten ersten Spurkranz (26a) aufweist.

7. Glasschiebetür nach Anspruch 6, **dadurch gekennzeichnet, dass** die Laufrolle (26) einen auf der dem Türflügel (12) zugewandten Seite angeordneten, zweiten Spurkranz (26b) aufweist, und die Lauffläche (50) zwischen dem ersten und dem zweiten Spurkranz (26a, 26b) angeordnet ist.

8. Glasschiebetür nach nach einem der Ansprüche 1 bis 5, **dadurch gekennzeichnet, dass** die Laufbahnoberfläche (28) konkav gewölbt ist und dass die Laufrolle (26) eine konvexe Lauffläche (50) aufweist.

9. Glasschiebetür nach einem der Ansprüche 1 bis 8, **dadurch gekennzeichnet, dass** das Laufwerk (16) zweiteilig ist, wobei ein die Laufrolle (26) tragendes erstes Teilstück (18) über eine Klemmschraube (22) mit einem zweiten Teilstück (20) verbindbar ist.

10. Glasschiebetür nach Anspruch 9, **dadurch gekennzeichnet, dass** das erste und das zweite Teilstück (18,20) klemmend an dem Türflügel (12) fixierbar sind.

11. Glasschiebetür nach Anspruch 9 oder 10, **dadurch gekennzeichnet, dass** die Klemmschraube (22) durch eine Aussparung (24) in dem Türflügel (12) greift.

12. Glasschiebetür nach einem der Ansprüche 1 bis 11, **dadurch gekennzeichnet, dass** die Laufschiene (10) mittels eines Eckverbinders (14) mit einer zweiten Laufschiene verbunden ist.

13. Glasschiebetür nach Anspruch 12, **dadurch gekennzeichnet, dass** in die Laufschiene (10) ein Klemmstein (70) klemmend eingesetzt ist, wobei zwischen dem Eckverbinder (14) und dem Klemmstein (70) eine Schraubverbindung (72) gebildet ist.

14. Glasschiebetür nach Anspruch 13, **dadurch gekennzeichnet, dass** in dem Eckverbinder (14) eine Schraubplatte (74) formschlüssig aufgenommen ist, in die die Schraubverbindung (72) eingreift.

## Claims

1. Glass sliding door (1) with a running rail (10) and with a door leaf (12) guided by means of at least one carriage (16), the carriage (16) having at least one roller (26) on one side which is guided on a track surface (28) of a track (30) of the running rail (10), the running rail (10) being adapted to be fastened on a wall by means of a wall connector (62), the wall connector (62) having a fastening plate (64), wherein the wall connector (62) has a plurality of protrusions (66, 68) which are formed as plate parts and engage into different groves of the running rail (10), one of the plurality of protrusions (66, 68) engaging into a guiding groove (38) of the running rail (10) and/or into a groove adjoining the track (30) of the running rail (10), which protrusion can be fastened to the running rail (10).

2. Glass sliding door according to claim 1, **characterized in that** the protrusion (66,68) is screwed to the running rail (10).

3. Glass sliding door according to claim 2, **characterized in that** the protrusion (66, 68) is screwed to the running rail (10) via a clamping block.

4. Glass sliding door according to one of claims 1 to 3, **characterized in that** the plate parts are angled from the fastening plate (64).

5. Glass sliding door according to one of claims 1 to 4, **characterized in that** the running rail (10) has a guiding body (32) arranged above the track (30), wherein the guiding body (32) keeps the roller (26) in a running position on the track (30), and wherein upon insertion of the carriage (16) into the running rail (10), the roller (26) can be swiveled between the guiding body (32) and the track (10) to reach the running position.

6. Glass sliding door according to one of claims 1 to 5, **characterized in that** the track surface (28) is convexly curved and **in that** the roller (26) has a concave running surface (50) with a first wheel flange (26a) arranged on the side facing away from the door leaf (12).

7. Glass sliding door according to claim 6, **characterized in that** roller (26) has a second wheel flange (26b) arranged on the side facing the door leaf (12), and the running surface (50) is arranged between the first and the second wheel flange (26a, 26b).

8. Glass sliding door according to one of claims 1 to 5, **characterized in that** the track surface (28) is concavely curved, and **in that** the roller (26) has a concave running surface (50).

9. Glass sliding door according to one of claims 1 to 8, **characterized in that** the carriage (16) is a two-part element, wherein a first part (18), which carries the roller (26), can be connected to a second part (20) via a clamping screw (22).

10. Glass sliding door according to claim 9, **characterized in that** the first and the second part (18, 20) can be fixed on the door leaf (12) in a clamping manner.

11. Glass sliding door according to claim 9 or 10, **characterized in that** the clamping screw (22) engages through a recess (24) in the door leaf (12).

12. Glass sliding door according to one of claims 1 to 11, **characterized in that** the running rail (10) is connected to a second running rail by means of a corner connector.

13. Glass sliding door according to claim 12, **characterized in that** a clamping block (70) is set into the running rail (10) in a clamping manner, wherein a screw connection is formed between the corner connector (14) and the clamping block (70).

14. Glass sliding door according to claim 13, **characterized in that** a screw plate (74) is positively received in the corner connector (14), into which plate the screw connection (72) engages.

## Revendications

1. Porte coulissante en verre (1) dotée d'une glissière (10) et dotée d'un battant de porte (12) guidé sur la glissière (10) avec au moins un chariot (16), dans laquelle le chariot (16) comporte d'un côté au moins un galet (26), lequel est guidé sur une surface (28) d'une voie (30) de la glissière (10), dans laquelle la glissière (10) peut être fixée à un mur au moyen d'un raccord mural (62), dans laquelle le raccord mural (62) comporte une plaque de fixation (64), dans laquelle le raccord mural (62) comporte plusieurs saillies (66, 68), lesquelles sont réalisées comme parties de plaque et s'engagent dans différentes rainures de la glissière (10), dans laquelle une des plusieurs saillies (66, 68) s'engage dans une rainure de guidage (38) de la glissière (10) et/ou dans une rainure adjacente à la voie (30) de la glissière (10) pouvant être fixée à la glissière (10).

2. Porte coulissante en verre selon la revendication 1, **caractérisée en ce que** la saillie (66, 68) est vissée à la glissière (10).

3. Porte coulissante en verre selon la revendication 2, **caractérisée en ce que** la saillie (66, 68) est vissée à la glissière (10) par le biais d'une pièce de serrage.

4. Porte coulissante en verre selon l'une des revendications 1 à 3, **caractérisée en ce que** les parties de plaque de la plaque de fixation (64) sont biseautées.

5. Porte coulissante en verre selon l'une des revendications 1 à 4, **caractérisée en ce que** la glissière (10) comporte un corps de guidage (32) disposé au-dessus de la voie (30), dans laquelle le corps de guidage (32) maintient le galet (26) dans une position de course sur la voie (30), et dans laquelle le galet (26) est pivotant lors de l'insertion du chariot (16) dans la glissière (10) afin d'atteindre la position de course entre le corps de guidage (32) et la voie (30).

6. Porte coulissante en verre selon l'une des revendications 1 à 5, **caractérisée en ce que** la surface de la voie (28) est courbée de manière convexe et **en ce que** le galet (26) comporte une surface de roulement concave (50) avec un premier boudin de roue (26a) disposé du côté se détournant du battant de porte (12).

7. Porte coulissante en verre selon la revendication 6, **caractérisée en ce que** le galet (26) comporte un deuxième boudin de roue (26b) disposé du côté tourné vers le battant de porte (12), et la surface de roulement (50) est disposée entre le premier et le deuxième boudin de roue (26a, 26b).

8. Porte coulissante en verre selon l'une des revendications 1 à 5, **caractérisée en ce que** la surface de la voie (28) est courbée de manière concave et **en ce que** le galet (26) comporte une surface de roulement convexe (50).

9. Porte coulissante en verre selon l'une des revendications 1 à 8, **caractérisée en ce que** le chariot (16) est en deux parties, dans laquelle une première partie (18) portant le galet (26) peut être reliée à une deuxième partie (20) par le biais d'une vis de serrage (22) .

10. Porte coulissante en verre selon la revendication 9, **caractérisée en ce que** la première et la deuxième partie (18, 20) peuvent être fixées par serrage au battant de porte (12).

11. Porte coulissante en verre selon la revendication 9 ou 10, **caractérisée en ce que** la vis de serrage (22) est prise dans le battant de porte (12) à travers un évidement (24).

12. Porte coulissante en verre selon l'une des revendications 1 à 11, **caractérisée en ce que** la glissière (10) est reliée à une deuxième glissière au moyen d'un raccord d'angle (14).

13. Porte coulissante en verre selon la revendication 12, **caractérisée en ce qu'**une pièce de serrage (70) est placée par serrage dans la glissière (10), dans laquelle une liaison vissée (72) est formée entre le raccord d'angle (14) et la pièce de serrage (70) .

14. Porte coulissante en verre selon la revendication 13, **caractérisée en ce qu'**une plaque de vissage (74) est accueillie en complémentarité de formes dans le raccord d'angle (14), la liaison vissée (72) entrant en prise dans celle-ci.
